# EUROPÄISCHE PATENTSCHRIFT

(11) **EP 2 913 285 B1**
(45) Veröffentlichungstag und Bekanntmachung des Hinweises auf die Patenterteilung: **03.08.2016**
(21) Anmeldenummer: 15153669.5
(22) Anmeldetag: 03.02.2015
(51) Int. Cl.: B65G 57/24, B65G 47/90, B65G 61/00

(54) **Handhabungsvorrichtung**
Handling device
Dispositif de manipulation

(30) Priorität: 26.02.2014 DE 202014100864 U
(43) Veröffentlichungstag der Anmeldung: 02.09.2015
(73) Patentinhaber: Krones Aktiengesellschaft, 93073 Neutraubling (DE)
(72) Erfinder: Koehl, Bernd, 93073 Neutraubling (DE)
(74) Vertreter: Benninger, Johannes

(56) Entgegenhaltungen:
- EP-A1- 2 508 452
- US-A1- 2006 242 785

## Beschreibung

Die vorliegende Erfindung betrifft eine Handhabungsvorrichtung zur Lagenzentrierung und / oder zum vertikalen und / oder horizontalen Transport von Stückgutlagen gemäß den Merkmalen des Oberbegriffes des Anspruches 1.

Die vorliegende Erfindung bezieht sich auf eine Vorrichtung zum schichtenweisen Palettieren und / oder Depalettieren von Stückgütern, wie beispielsweise Kartons, Flaschen, Dosen etc.

DE 2837029 A1 und DE 3715805 C2 offenbaren beispielsweise Vorrichtungen, bei denen die Stückgüter in einer ersten Förderrichtung von einem Förderer einem Stückgutaufgabeplatz zugeführt und anschließend durch einen Schieber in einer zweiten Förderrichtung, insbesondere senkrecht zu ersten Förderrichtung, auf eine Unterstützungsebene aufgeschoben werden. Die Unterstützungsebene ist anhebbar bzw. absenkbar, so dass nacheinander mehrere Stückgutlagen in verschiedenen Höhenpositionen auf eine Palette abgeladen werden können. Zum Absetzen der Stückgutlagen ist die Unterstützungsebene quer zur Palette verfahrbar. Beim Absetzen der Stückgutlage auf der Palette wird diese vermittels eines weiteren Querschiebers in ihrer Position gehalten, während die Unterstützungsebene seitlich unter der Stückgutlage weggezogen wird.

DE 29907748 U1 offenbart eine Vorrichtung, bei der der Unterstützungsebene zugeordnete Schieber im Wesentlichen parallel zur Unterstützungsebene über ihren seitlichen Rand hinaus in Richtung zu der von der Unterstützungsebene wegweisenden Seite des Stückgutaufgabeplatzes verfahrbar ist und eine Doppelfunktion erfüllt. Dadurch ist der Schieber zum Überschieben des Stückgutes nicht mehr notwendig, wodurch die Vorrichtung einfacher und kostengünstiger ist.

DE 20021874 U1 beschreibt eine Vorrichtung bestehend aus einer Umsetzvorrichtung mit sowohl vertikal als auch horizontal gesteuert verfahrbaren Lastaufnehmern zum Umsetzen der Artikel von der Lagenaufladestation zu einer Palettenentladestation und / oder von einer Palettenbeladestation zu einer Lagenaufladestation.

Bevor die Stückgutlage auf die Palette übergeschoben wird, müssen die Stückgüter der Lage zentriert werden, damit die Lage korrekt übergeschoben werden kann. Bei bekannten Lagenzentrierungen werden die Stückgüter über zwei Platten vorne und hinten, sowie zwei Platten links und rechts zentriert. Die Platten links und rechts geben die Längsrichtung der Maschine vor. Bisher werden die Platten kommissionsbedingt in Längsrichtung aufgegeben. Nachteilig ist hierbei, dass nur Standardplatten für Aufträge verwendet werden können, bei denen der Unterschied zwischen kleinster und größter Palettierung nicht größer als ca. 40mm ist.

Aufgabe der Erfindung ist es, eine Handhabungsvorrichtung zur Lagenzentrierung und / oder zum vertikalen und / oder horizontalen Transport von Stückgutlagen bereitzustellen, die einfach und schnell auf verschiedene, sich in ihrer Größe deutlich unterscheidende Palettengrößen einstellbar ist.

Die obige Aufgabe wird durch eine Handhabungsvorrichtung gelöst, die die Merkmale in dem Schutzanspruch 1 umfasst. Weitere vorteilhafte Ausgestaltungen werden durch die Unteransprüche beschrieben.

Die Erfindung betrifft eine Handhabungsvorrichtung zur Lagenzentrierung und / oder zum vertikalen und / oder horizontalen Transport von Stückgutlagen, bestehend aus einer Mehrzahl von Stückgütern, beispielsweise Dosen, Flaschen, Karton oder Ähnlichem. Die Handhabungsvorrichtung umfasst eine Unterstützungsebene, auf die die Stückgüter mittels einer Fördereinrichtung aufgeschoben werden. Die Positionierung der Stückgüter auf der Unterstützungsebene wird durch einen Rahmen begrenzt. Dieser wird aus zwei linear, zumindest weitgehend horizontal verfahrbaren, parallel zueinander angeordnete Seitenbegrenzungen und zwei linear, zumindest weitgehend horizontal verfahrbaren, parallel zueinander und orthogonal zu den Seitenbegrenzungen angeordneten Querbegrenzungen gebildet. Mindestens eine der Querbegrenzungen ist zusätzlich um eine Drehachse parallel zur Länge der Querbegrenzungen schwenkbar. Das Aufschieben der Stückgüter auf die Unterstützungsebene erfolgt über die Öffnung, die durch Aufschwenken einer Querbegrenzung freigelegt ist. Nachdem alle Stückgüter auf der Unterstützungsebene angeordnet sind, wird die Öffnung durch Zuschwenken der Querbegrenzung verschlossen. Die auf der Unterstützungsebene angeordnete Stückgutlage kann nun vertikal und / oder horizontal verfahren und auf einer Palette abgesetzt werden. Anschließend wird eine der Querbegrenzungen durch Verschwenken geöffnet und die Unterstützungsebene durch eine horizontale Verschiebung unter der Stückgutlage weggezogen. Für den Fachmann ist klar, dass die Handhabungsvorrichtung nicht nur zum Palettieren von Stückgutlagen Anwendung findet, sondern auch zum Depalettieren verwendet werden kann.

Erfindungsgemäß sind die Seitenbegrenzungen der Handhabungsvorrichtung jeweils mindestens zweiteilig aufgebaut und längenvariabel.

Gemäß einer bevorzugten Ausführungsform der Erfindung ist in einer ersten Einstellposition der Handhabungsvorrichtung jede der Seitenbegrenzungen mechanisch mit den beiden Querbegrenzungen gekoppelt. In einer zweiten Arbeitsposition der Handhabungsvorrichtung sind die Seitenbegrenzungen dagegen von den Querbegrenzungen mechanisch entkoppelt.

Gemäß einer weiteren bevorzugten Ausführungsform der Erfindung weisen die Querbegrenzungen Mitnehmerelemente auf und die Seitenbegrenzungen umfassen Aufnahmevorrichtungen zur Aufnahme der Mitnehmerelemente. Gemäß einer alternativen Ausführungsform weisen die Querbegrenzungen Mitnehmerelemente auf und die Seitenbegrenzungen umfassen Aufnahmevorrichtungen zur Aufnahme der Mitnehmerelemente. Insbesondere sind die Querbegrenzungen und die Seitenbegrenzungen jeweils als flache Quader bzw. Bleche ausgebildet, wobei die Mitnehmerelemente und / oder Aufnahmevorrichtungen jeweils an den endständigen, zumindest weitgehend orthogonal zu Unterstützungsebene angeordneten, kurzen Seitenflächen ausgebildet sind.

Vorzugsweise sind den Aufnahmevorrichtungen Verriegelungsmittel zugeordnet, mittels derer die in den Aufnahmevorrichtungen aufgenommenen Mitnehmerelemente zumindest zeitweise fixiert werden können. Insbesondere sind in einer ersten Einstellposition der Handhabungsvorrichtung die Mitnehmerelemente in den Aufnahmevorrichtungen angeordnet und ortsfest fixiert.

Gemäß einer bevorzugten Ausführungsform der Erfindung bestehen die Seitenbegrenzungen aus jeweils mindestens zwei Teilen, die teleskopartig gegeneinander verschieblich sind. Die mindestens zwei Teile sind in einer ersten Einstellposition der Handhabungsvorrichtung gegeneinander verschieblich. In einer zweiten Arbeitsposition der Handhabungsvorrichtung ist dagegen die relative Anordnung der mindestens zwei Teile zueinander fixiert. Als Fixiermittel dienen beispielsweise geeignete insbesondere schnell und / oder einfach lösbare Verriegelungselemente und / oder magnetische Mittel.

Zum Einstellen der Länge der Seitenbegrenzungen werden die Querbegrenzungen an die Seitenbegrenzungen heran verfahren, so dass die Mitnehmerelemente in die Aufnahmevorrichtungen greifen. Die Mitnehmerelemente werden in den Aufnahmevorrichtungen fixiert. Durch erneutes lineares beziehungsweise horizontales Verfahren der Querbegrenzungen, können nunmehr die Seitenteile der Seitenbegrenzungen gegeneinander verfahren werden, so dass sich die Länge der Seitenbegrenzungen entsprechend ändert. Ist die gewünschte Länge der Seitenbegrenzung eingestellt, dann werden die Seitenteile einer Seitenbegrenzung vorzugsweise in ihrer Position zueinander fixiert, so dass sich die Länge der Seitenbegrenzungen in der zweiten Arbeitsposition bzw. im laufenden Produktionsbetrieb nicht verstellen kann.

Nachdem die Verriegelung zwischen den Mitnehmerelementen und den Aufnahmevorrichtungen gelöst worden ist, werden die Querbegrenzungen geringfügig auseinander verfahren, insbesondere um einen Mindestabstand, der mindestens der Länge des Mitnehmerelements entspricht. Vorzugsweise werden die Querbegrenzungen um einen Abstand zwischen 10 und 100mm, insbesondere um einen Abstand von ungefähr 40mm von den Seitenbegrenzungen weg linear bzw. horizontal verfahren. Somit sind in einer zweiten Arbeitsposition der Handhabungsvorrichtung die Mitnehmerelemente beabstandet zu den Aufnahmevorrichtungen angeordnet.

Anschließend können nunmehr die Seitenbegrenzungen linear bzw. horizontal verfahren und dabei derart eingestellt werden, dass der Abstand zwischen den Seitenbegrenzungen an die jeweilige Palette bzw. gewünschte Größe der Stückgutlage angepasst ist.

Gemäß einer Ausführungsform der Erfindung entspricht der Abstand zwischen den Querbegrenzungen in der zweiten Arbeitsposition der Handhabungsvorrichtung mindestens der eingestellten Länge der Seitenbegrenzungen. Wie oben dargestellt, sind die Querbegrenzungen in der zweiten Arbeitsposition geringfügig beabstandet zu den Seitenbegrenzungen angeordnet, d.h. der Abstand zwischen den Querbegrenzungen ist größer als die eingestellte Länge der Seitenbegrenzungen.

Gemäß einer Ausführungsform der Erfindung besteht der Kern der Erfindung darin, dass die Platten der Längsrichtung, d.h. die Seitenbegrenzungen, aus zwei Teilen bestehen, die teleskopähnlich auseinandergefahren werden können. Die Teile der Platten werden über Dauermagnete an ihrer jeweiligen Position fixiert. Zusätzlich kann eine Fixierung mit einem Haken realisiert werden, für den Fall, dass die Magnetkraft im laufenden Produktionsbetrieb zu gering ist. Die Platten in Längsrichtung können über die zwei vorhandenen Motorachsen der Lagenzentrierung stufenlos verstellt werden. Das Verschieben der Platten auf die gewünschte Länge erfolgt über Mitnehmer an den Querplatten. Die Einstellung kann innerhalb der Lagenzentrierung eigenständig durchgeführt werden.

Ein wesentlicher Vorteil der erfindungsgemäßen Handhabungsvorrichtung besteht darin, dass diese an mehrere unterschiedliche Palettengrößen angepasst werden kann. Hierbei werden keine zusätzlichen Aktoren, insbesondere Antriebe, Zylinder und Ventile benötigt und somit entfällt auch eine komplizierte Verlegung von zusätzlichen Kabeln und Schläuchen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Vorrichtung zur Lagezentrierung gemäß dem Stand der Technik, anders gesagt gemäß dem Oberbegriff des Anspruchs 1.
Figuren 2A und 2B zeigen schematische Darstellungen einer erfindungsgemäßen Vorrichtung zur Lagezentrierung.
Figuren 3 zeigt eine perspektivische Darstellung einer erfindungsgemäßen Vorrichtung zur Lagezentrierung.
Figuren 4 bis 6 zeigen Detaildarstellungen der erfindungsgemäßen Vorrichtung zur Lagezentrierung.
Figuren 7 bis 9 zeigen schematische Darstellung verschieden eingestellter erfindungsgemäßer Vorrichtungen zur Lagezentrierung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

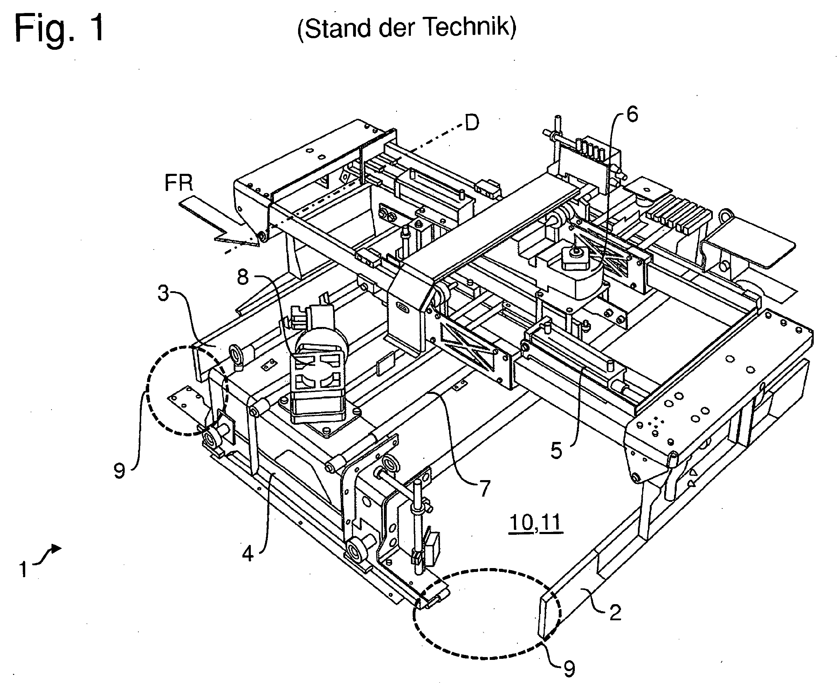

Figur 1 zeigt eine schematische Ansicht einer Handhabungsvorrichtung 1 zur Lagezentrierung gemäß dem Stand der Technik. Die Handhabungsvorrichtung 1 umfasst eine Unterstützungsebene 11 und vier seitliche Begrenzungen, die vorzugsweise als Rechteck angeordnet sind und deren Anordnung bzw. Abstände die Palettengröße wiederspiegeln. Die Anordnung aus Unterstützungsebene 11 und seitlichen Begrenzungen bildet den Stückgutaufgabeplatz 10. Insbesondere sind eine vordere Querplatte 2 und eine parallel angeordnete hintere Querplatte 3 sowie zwei parallele Seitenbegrenzungen 4 vorgesehen. Die Position der Querplatten 2, 3 und der Seitenbegrenzungen 4 ist durch eine Linear- bzw. Horizontalverschiebung in gewissen Grenzen möglich. Die Linearbewegung ist zum einen durch die Länge der Querplatten 2, 3 und die Länge der Seitenbegrenzungen 4 begrenzt, insbesondere wird durch die Querplatten 2, 3 und die Seitenbegrenzungen 4 eine minimale Fläche begrenzt, die sich aus dem Produkt der Länge einer Querplatte 2, 3 und der Länge einer Seitenbegrenzung 4 berechnet. Durch Linearverschiebung kann nunmehr der Abstand zwischen zwei Seitenbegrenzungen 4 und zwischen den Querplatten 2, 3 vergrößert werden. Dies ist aber nur in einem begrenzten Umfang sinnvoll, da dadurch an den Eckpunkten zwischen einer Querplatte 2, 3 und einer direkt benachbarten Seitenbegrenzung 4 Lücken 9 entstehen. Diese Lücken 9 dürfen jedoch nur so groß sein, dass ein jeweiliges Stückgut nicht durch diese hindurchtreten kann. Aus diesem Grund können mit einer Handhabungsvorrichtung gemäß dem Stand der Technik nur Standardplatten verwendet werden, bei denen der Unterschied zwischen kleinster und größter Palettierung nicht größer als ca. 40mm ist.

Die Querplatten 2, 3 sind hängend, linearverschieblich an einem ersten Rahmen 5 angeordnet. Die Linear- bzw. Horizontalverschiebung der Querplatten 2, 3 wird durch einen Antrieb 6 angetrieben. Die Seitenbegrenzungen 4 sind hängend, linear- bzw. horizontalverschieblich an einem zweiten Rahmen 7 angeordnet. Die Linear- bzw. Horizontalverschiebung der Seitenbegrenzungen 4 wird durch einen Antrieb 8 bewirkt. Zumindest eine der beiden Querplatten 2,3 ist zudem noch schwenkbeweglich um eine Drehachse D und kann insbesondere aus der Transportebene für die Stückgüter nach oben hin weggeschwenkt werden.

Bevor die Stückgutlage auf eine Palette übergeschoben wird, müssen die Stückgüter der Lage zentriert werden, damit die Lage korrekt übergeschoben werden kann. Die Stückgüter, beispielsweise Flaschen, Dosen etc., werden in einer ersten Förderrichtung FR von einem Förderer (nicht dargestellt) einem Stückgutaufgabeplatz 10 bzw. der Unterstützungsebene 11 zugeführt. Der Stückgutaufgabeplatz 10 wird durch die beiden Querplatten 2, 3 und die Seitenbegrenzungen 4 definiert. Zum Beladen des Stückgutaufgabeplatzes 10 wird die eine Querplatte 3 nach oben weggeschwenkt, so dass die Stückgüter in den Stückgutaufgabeplatzes 10 hineinbefördert werden können.

Befinden sich alle Stückgüter innerhalb des Stückgutaufgabeplatzes 10, dann wird die Querplatte 3 wieder herabgeschwenkt. Anschließend kann die gesamte Handhabungsvorrichtung 1, angehoben beziehungsweise abgesenkt und/ oder seitlich verschwenkt werden. Zum Absetzen der Stückgutlage ist die Unterstützungsebene 11 quer zur Palette verfahrbar. Beim Absetzen der Stückgutlage auf der Palette wird diese vermittels eines der Querschieber 2, 3 in ihrer Position gehalten, während die Unterstützungsebene 11 seitlich unter der Stückgutlage weggezogen wird.

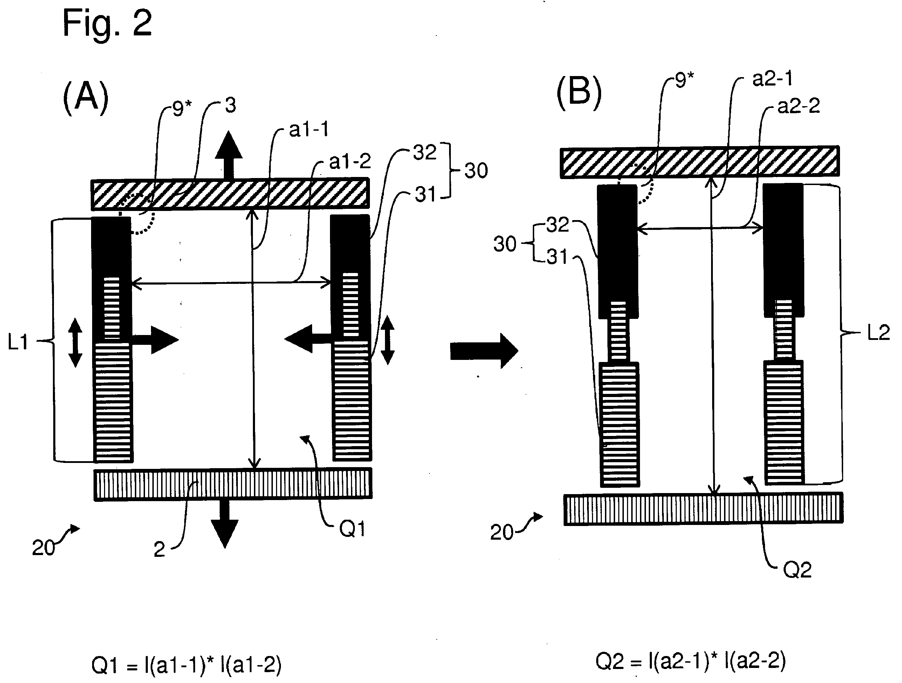

Figuren 2A und 2B zeigen schematische Darstellungen einer Ausführungsform einer erfindungsgemäßen Handhabungsvorrichtung 20 zur Lagezentrierung. Um die Übersichtlichkeit zu verbessern, sind nur die Querplatten 22, 23 und die Seitenbegrenzungen 30 dargestellt. Die seitlichen Begrenzungen der Längsrichtung, d.h. die Seitenbegrenzungen 30 sind jeweils zweiteilig aufgebaut und bestehen aus einem ersten Seitenteil 31 und einem zweiten Seitenteil 32, die teleskopähnlich ineinander bzw. auseinandergeschoben werden können. In Figur 2A sind die Seitenteile 31, 32 maximal ineinander geschoben, so dass die Seitenbegrenzungen eine erste, minimale Länge L1 aufweisen. In Figur 2B sind die Seitenteile 31, 32 teilweise auseinander geschoben, so dass die Seitenbegrenzungen eine zweite Länge L2 aufweisen.

Die Handhabungsvorrichtung 20 gemäß Figur 2A begrenzt eine erste Stückgutlage mit einer ersten Querschnittsfläche Q1. Diese ergibt sich aus dem Produkt des Abstands a1-1 zwischen den beiden Querplatten 22, 23 und des Abstands a1-2 zwischen den beiden Seitenbegrenzungen 30. Die Handhabungsvorrichtung 20 gemäß Figur 2B begrenzt eine zweite Stückgutlage mit einer zweiten Querschnittsfläche Q2. Diese ergibt sich aus dem Produkt des Abstands a2-1 zwischen den beiden Querplatten 22, 23 und des Abstands a2-2 zwischen den beiden Seitenbegrenzungen 30. Zur Umstellung der Handhabungsvorrichtung 20 von einer ersten Stückgutlage gemäß Figur 2A auf eine zweite Stückgutlage gemäß Figur 2B werden die Querplatten 22, 23 linear nach außen verfahren und zeitgleich die Seitenteile 31, 32, der Seitenbegrenzungen 30 auseinander gezogen. Anschließend werden die Seitenbegrenzungen 30 linear bzw. horizontal aufeinander zu verfahren, d.h. der Abstand zwischen den Seitenbegrenzungen 30 wird entsprechend eingestellt.

Die Handhabungsvorrichtung 20 kann somit Stückgutlagen bzw. Paletten mit einer deutlich unterschiedlichen Querschnittsfläche Q1, Q2 bedienen, wobei die Lücken 9* an den Ecken zwischen den Querplatten 22, 23 und Seitenbegrenzungen 30 jeweils gering gehalten werden können und nicht durch die Länge der Querplatten 2,3 und Seitenbegrenzungen 4 (vergleiche Figur 1) vorgegeben werden.

Die Seitenteile 31, 32 der Seitenbegrenzungen 30 werden vorzugsweise über Dauermagnete in ihrer jeweilig eingestellten Position fixiert. Zusätzlich kann eine Fixierung mit einer Verriegelung, beispielsweise mit einem Haken, realisiert werden, insbesondere für den Fall, dass die Magnetkraft im laufenden Betrieb der Handhabungsvorrichtung 20 nicht ausreicht.

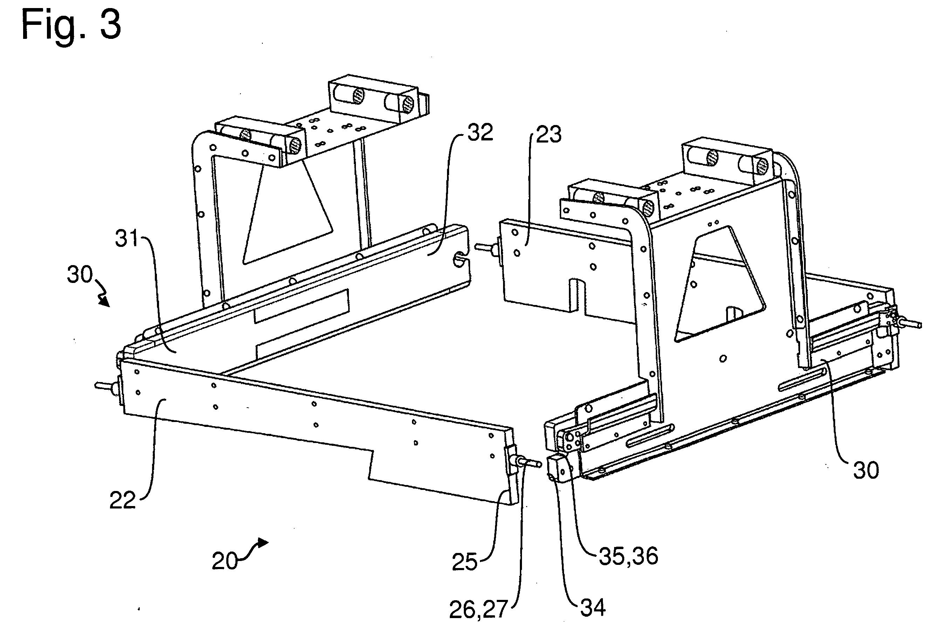

Figur 3 zeigt eine perspektivische Darstellung einer erfindungsgemäßen Handhabungsvorrichtung 20 zur Lagezentrierung. Um die Übersichtlichkeit zu verbessern, sind wiederum nur die Querplatten 22, 23 und die Seitenbegrenzungen 30 aus ersten und zweiten Seitenteilen 31, 32 dargestellt. Die Querplatten 22, 23 weisen an ihren freien Enden 25 Mitnehmerelemente 26 auf. Die Seitenbegrenzungen 30 weisen an ihren freien Enden 34 korrespondierende Aufnahmen 35 für die Mitnehmerelemente 26 der Querplatten 22, 23 auf. Beispielsweise kann es sich bei den Mitnehmerelementen 26 um Bolzen 27 o.ä. handeln, die in entsprechende Einkerbungen 36 der freien Enden 34 der Seitenbegrenzungen 30 eingeschoben werden können.

Die Seitenteile 31, 32 der Seitenbegrenzungen 30 in Längsrichtung können über die zwei vorhandenen Antriebe 6, 8 (vergleiche Figur 1) der Handhabungsvorrichtung 20 zur Lagezentrierung stufenlos verstellt werden. Zur Einstellung der Länge der Seitenbegrenzungen 30 werden die Querplatten 22, 23 so weit an die Seitenbegrenzungen 30 herangeschoben, dass die Mitnehmerelemente 26 in die Aufnahmen 35 eingreifen. Vorzugsweise erfolgt eine automatische Verriegelung, so dass die Mitnehmerelemente 26 zumindest vorübergehend in den Aufnahmen 35 fixiert sind. Durch eine erneute Linearverschiebung mindestens einer Querplatte 22, 23 kann nunmehr die Länge der Seitenbegrenzungen 30 eingestellt werden. Wird der Abstand zwischen den Querplatten 22, 23 relativ zueinander vergrößert, dann werden die Seitenteile 31, 32 teleskopartig auseinander gezogen, wodurch sich die Länge der Seitenbegrenzungen 30 erhöht. Wird der Abstand zwischen den Querplatten 22, 23 relativ zueinander verringert, dann werden die Seitenteile 31, 32 teleskopartig ineinander geschoben, wodurch sich die Länge der Seitenbegrenzungen 30 verkürzt.

Anschließend wird die Verriegelung zwischen den Mitnehmern 26 und den Aufnahmen 35 gelöst, was manuell erfolgen kann, aber vorzugsweise automatisiert möglich ist. Die Querplatten 22, 23 werden zumindest soweit linear bzw. horizontal auseinander verfahren, dass sich die Mitnehmern 26 vollständig außerhalb der Aufnahmen 35 befinden. Im laufenden Palettierbetrieb sind die Querplatten 22, 23 und die Seitenbegrenzungen 30 insbesondere ohne Kontakt zueinander. Nunmehr können die Seitenbegrenzungen 30 linear bzw. horizontal verfahren werden, um den Abstand zwischen den Seitenbegrenzungen 30 auf die Größe der Palette abzustimmen. Die Einstellung der Länge der Seitenbegrenzungen 30 kann innerhalb der Handhabungsvorrichtung 20 zur Lagenzentrierung eigenständig durchgeführt werden. Insbesondere werden keine Zusatzwerkzeuge und / oder Formatteile benötigt.

Die Handhabungsvorrichtung 20 kann somit einfach und schnell auf mehrere unterschiedliche Palettengrößen angepasst werden, wobei die Anpassung der Länge der Seitenbegrenzungen 30 mittels der Motorik der schwenkbaren Querplatten 22, 23 erfolgt, so dass keine zusätzlichen Aktoren benötigt werden, insbesondere werden keine zusätzlichen Antriebe, Zylinder und / oder Ventile benötigt. Somit entfällt auch die komplizierte Kabel- und Schlauchverlegung an der Handhabungsvorrichtung 20. Die Anpassung der Länge der Seitenbegrenzungen 30 ist weitgehend stufenlos möglich.

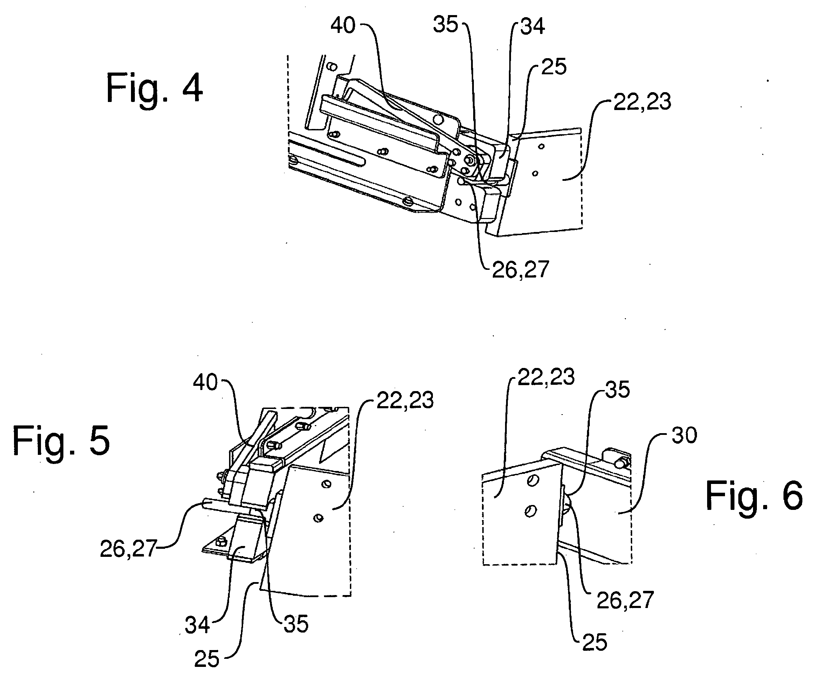

Figuren 4 bis 6 zeigen Detaildarstellungen der erfindungsgemäßen Handhabungsvorrichtung 20 zur Lagezentrierung, insbesondere zeigen die Darstellungen die Positionierung des Mitnehmers 26 einer Querplatte 22, 23 in einer Aufnahme 35 einer Seitenbegrenzung 30 in unterschiedlichen Ansichten. Weiterhin ist ein Verriegelungsmittel 40 dargestellt, das während des Einstellvorgangs der Fixierung des Mitnehmers 26 in der Aufnahme 35 dient.

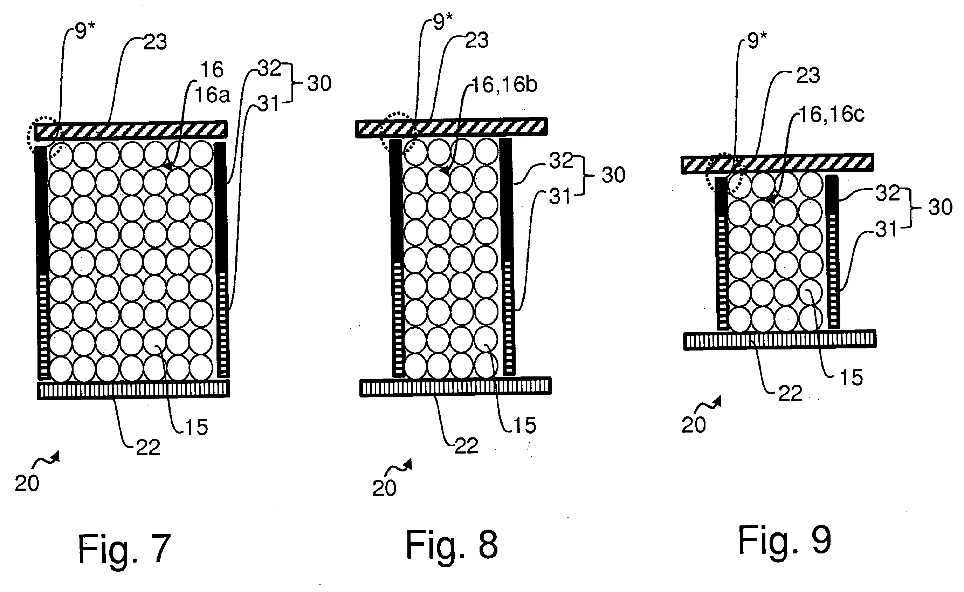

Figuren 7 bis 9 zeigen schematische Darstellungen einer erfindungsgemäßen Handhabungsvorrichtung 20 zur Lagezentrierung, die für unterschiedliche Palettengrößen bzw. Stückgutlagen 16 eingestellt ist. Beispielhaft sind in allen drei Beispielen vergleichbare Stückgüter 15 entsprechend der vorgegebenen Palettengröße zu unterschiedlichen Stückgutlagen 16a, 16b, 16c zusammengestellt. Die Handhabungsvorrichtung 20 wurde gemäß der Beschreibung zu Figur 3 entsprechend eingestellt, insbesondere wurde die Länge der Seitenbegrenzungen 30 und somit zwingend der Mindestabstand zwischen den Querplatten 22, 23 eingestellt. Dies entspricht der maximalen Verarbeitungsbreite der Maschine. Weiterhin wurde der Abstand zwischen den Seitenbegrenzungen 30 durch Linearverstellung derselben ebenfalls entsprechend der Palettengröße eingestellt.

Aus dem Vergleich von Figur 7 mit Figur 9 wird deutlich, dass mittels der Handhabungsvorrichtung 20 Paletten bedient werden können, die sich in ihrer Größe deutlich unterscheiden, ohne dass ein aufwändiger Wechsel von Formatteilen notwendig ist, insbesondere ohne dass ein Wechsel der Seitenbegrenzungen notwendig ist. Es müssen auch nicht verschiedene Seitenbegrenzungen unterschiedlicher Länge vorgehalten und gelagert werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Handhabungsvorrichtung
- 2: vordere Querplatte
- 3: hintere Querplatte bzw. Schiebeplatte
- 4: Seitenbegrenzung
- 5: erster Rahmen
- 6: Antrieb
- 7: zweiter Rahmen
- 8: Antrieb
- 9: Lücke
- 10: Stückgutausgabeplatz
- 11: Unterstützungsebene
- 15: Stückgut
- 16: Stückgutlage
- 20: Handhabungsvorrichtung
- 22: Querplatte
- 23: Querplatte
- 25: freies Ende
- 26: Mitnehmerelement
- 27: Bolzen
- 30: Seitenbegrenzung
- 31: erstes Seitenteil
- 32: zweites Seitenteil
- 34: freies Ende
- 35: Aufnahme
- 36: Einkerbung
- 40: Verriegelungsmittel
- D: Drehachse
- FR: Förderrichtung

## Patentansprüche

1. Handhabungsvorrichtung (20) zur Lagenzentrierung und / oder zum vertikalen und / oder horizontalen Transport von Stückgutlagen (16), umfassend eine Unterstützungsebene (11) und einen die Stückgutlage (16) begrenzenden Rahmen, wobei der Rahmen aus zwei zumindest weitgehend horizontal verfahrbaren, parallel zueinander angeordneten Seitenbegrenzungen (4, 30) und zwei zumindest weitgehend horizontal verfahrbaren, parallel zueinander und orthogonal zu den Seitenbegrenzungen (4, 30) angeordneten Querbegrenzungen (2, 3, 22, 23) gebildet ist, wobei mindestens eine der Querbegrenzungen (2, 3, 22, 23) zusätzlich um eine Drehachse (D) parallel zur Länge der Querbegrenzungen (2, 3, 22, 23) schwenkbar ist, **dadurch gekennzeichnet, dass** die Seitenbegrenzungen (30) jeweils mindestens zweiteilig aufgebaut und längenvariabel sind.

2. Handhabungsvorrichtung (20) nach Anspruch 1, wobei in einer ersten Einstellposition der Handhabungsvorrichtung (20) jede der Seitenbegrenzungen (30) mechanisch mit beiden Querbegrenzungen (22, 23) gekoppelt ist und wobei in einer zweiten Arbeitsposition der Handhabungsvorrichtung (20) die Seitenbegrenzungen (30) und die Querbegrenzungen (22, 23) mechanisch entkoppelt sind.

3. Handhabungsvorrichtung (20) nach Anspruch 1 oder 2, wobei die Querbegrenzungen (22, 23) Mitnehmerelemente (26) aufweisen, und wobei die Seitenbegrenzungen (30) zur Aufnahme der Mitnehmerelemente (26) ausgebildete Aufnahmevorrichtungen (35) umfassen.

4. Handhabungsvorrichtung (20) nach Anspruch 1 oder 2, wobei die Seitenbegrenzungen (30) Mitnehmerelemente (26) aufweisen, und wobei die Querbegrenzungen (22, 23) zur Aufnahme der Mitnehmerelemente (26) ausgebildete Aufnahmevorrichtungen (35) umfassen.

5. Handhabungsvorrichtung (20) nach einem der voranstehenden Ansprüche, wobei den Aufnahmevorrichtungen (35) Verriegelungsmittel (40) zur Fixierung der Mitnehmerelemente (26) in den Aufnahmevorrichtungen (35) zugeordnet sind.

6. Handhabungsvorrichtung (20) nach einem der voranstehenden Ansprüche, wobei Seitenbegrenzungen (30) aus jeweils mindestens zwei Teilen (31, 32) bestehen, die teleskopartig gegeneinander verschieblich sind.

7. Handhabungsvorrichtung (20) nach einem der Ansprüche 2 bis 6, wobei die mindestens zwei Teile (31, 32) in der ersten Einstellposition der Handhabungsvorrichtung (20) gegeneinander verschieblich sind und wobei in der zweiten Arbeitsposition der Handhabungsvorrichtung (20) die relative Anordnung der mindestens zwei Teile (31, 32) zueinander fixiert ist.

8. Handhabungsvorrichtung (20) nach Anspruch 7, wobei die relative Anordnung der mindestens zwei Teile (31, 32) zueinander über Verriegelungselemente oder magnetische Mittel fixiert ist.

9. Handhabungsvorrichtung (20) nach einem der Ansprüche 2 bis 8, wobei in der ersten Einstellposition der Handhabungsvorrichtung (20) die Mitnehmerelemente (26) in den Aufnahmevorrichtungen (35) angeordnet und ortsfest fixiert sind und wobei in der zweiten Arbeitsposition der Handhabungsvorrichtung (20) die Mitnehmerelemente (26) beabstandet zu den Aufnahmevorrichtungen (35) angeordnet sind.

10. Handhabungsvorrichtung (20) einem der Ansprüche 2 bis 9, wobei in der zweiten Arbeitsposition der Handhabungsvorrichtung (20) ein Abstand (a1-1, a2-1) zwischen den Querbegrenzungen (22, 23) mindestens einer eingestellten Länge (L1, L2) der Seitenbegrenzungen (30) entspricht, insbesondere wobei in der zweiten Arbeitsposition der Handhabungsvorrichtung (20) der Abstand (a1-1, a2-1) zwischen den Querbegrenzungen (22, 23) größer als die eingestellte Länge der Seitenbegrenzungen (30).

## Claims

1. A handling apparatus (20) for the centering of layers and/or for the vertical and/or horizontal transport of piece good layers (16), the handling apparatus (20) comprising a supporting level (11) and a frame delimiting the piece good layer (16), wherein the frame is formed from two at least largely horizontally movable lateral limits (4, 30) arranged parallel to each other and two at least largely horizontally movable transverse limits (2, 3, 22, 23) arranged parallel to each other and orthogonal to the side limits (4, 30), wherein at least one of the transverse limits (2, 3, 22, 23) is additionally pivotable about an axis of rotation (D) parallel to the length of the transverse limits (2, 3, 22, 23), **characterised in that** the lateral limits (30) are each constructed in at least two parts and are variable in length.

2. The handling apparatus (20) as recited in claim 1 wherein, in a first setting position of the handling apparatus (20), each of the lateral limits (30) is mechanically coupled with both transverse limits (22, 23), and wherein, in a second operating position of the handling apparatus (20), the lateral limits (30) and the transverse limits (22, 23) are mechanically decoupled.

3. The handling apparatus (20) as recited in claim 1 or 2 wherein the transverse limits (22, 23) have driver elements (26), and wherein the lateral limits (30) comprise mounting fixtures (35) formed for mounting the driver elements (26) thereinto.

4. The handling apparatus (20) as recited in claim 1 or 2 wherein the lateral limits (30) have driver elements (26), and wherein the transverse limits (22, 23) comprise mounting fixtures (35) formed for mounting the driver elements (26) thereinto.

5. The handling apparatus (20) as recited in one of the previous claims wherein locking means (40) for fixing the driver elements (26) in the mounting fixtures (35) are assigned to the mounting fixtures (35).

6. The handling apparatus (20) as recited in one of the previous claims wherein lateral limits (30) consist in each case of at least two parts (31, 32), which are shiftable in relation to each other in a telescope-like manner.

7. The handling apparatus (20) as recited in one of the claims 2 to 6 wherein, in the first setting position of the handling apparatus (20), the at least two parts (31, 32) are shiftable in relation to each other, and wherein, in the second operating position of the handling apparatus (20), the relative arrangement of the at least two parts (31, 32) is fixed in relation to each other.

8. The handling apparatus (20) as recited in claim 7 wherein the relative arrangement of the at least two parts (31, 32) is fixed in relation to each other by way of locking elements or magnetic means.

9. The handling apparatus (20) as recited in one of the claims 2 to 8 wherein, in the first setting position of the handling apparatus (20), the driver elements (26) are arranged and stationarily fixed in the mounting fixtures (35), and wherein, in the second operating position of the handling apparatus (20), the driver elements (26) are arranged to be spaced apart from the mounting fixtures (35).

10. The handling apparatus (20) as recited in one of the claims 2 to 9 wherein, in the second operating position of the handling apparatus (20), a distance (a1-1, a2-1) between the transverse limits (22, 23) corresponds to at least a length (L1, L2), to which the lateral limits (30) have been set, in particular wherein, in the second operating position of the handling apparatus (20), the distance (a1 -1, a2-1) between the transverse limits (22, 23) is greater than the length, to which the lateral limits (30) have been set.

## Revendications

1. Dispositif de manipulation (20) pour le centrage de couches et / ou pour le transport vertical et / ou horizontal de couches de marchandises à la pièce (16), comprenant un plan de support (11) et un cadre délimitant la couche de marchandises à la pièce (16), ledit cadre étant constitué par deux limitations latérales (4, 30) déplaçables horizontalement au moins dans une large mesure et disposées parallèlement l'une à l'autre ainsi que par deux limitations transversales (2, 3, 22, 23) déplaçables horizontalement au moins dans une large mesure, disposées parallèlement l'une à l'autre et orthogonalement aux limitations latérales (4, 30), dans lequel l'une au moins des limitations transversales (2, 3, 22, 23) est en sus apte à pivoter autour d'un axe de rotation (D) parallèlement à la longueur des limitations transversales (2, 3, 22, 23), **caractérisé par le fait que** les limitations latérales (30) sont construites chacune en au moins deux parties et sont variables en longueur.

2. Dispositif de manipulation (20) selon la revendication 1, dans lequel, dans une première position de réglage du dispositif de manipulation (20), chacune des limitations latérales (30) est couplée mécaniquement aux deux limitations transversales (22, 23), et dans lequel, dans une deuxième position de travail du dispositif de manipulation (20), les limitations latérales (30) et les limitations transversales (22, 23) sont découplées mécaniquement.

3. Dispositif de manipulation (20) selon la revendication 1 ou 2, dans lequel les limitations transversales (22, 23) présentent des éléments d'entraînement (26), et dans lequel les limitations latérales (30) comprennent des dispositifs de réception (35) réalisés pour recevoir lesdits éléments d'entraînement (26).

4. Dispositif de manipulation (20) selon la revendication 1 ou 2, dans lequel les limitations latérales (30) présentent des éléments d'entraînement (26), et dans lequel les limitations transversales (22, 23) comprennent des dispositifs de réception (35) réalisés pour recevoir lesdits éléments d'entraînement (26).

5. Dispositif de manipulation (20) selon l'une quelconque des revendications précédentes, dans lequel des moyens de verrouillage (40) destinés à fixer les éléments d'entraînement (26) dans les dispositifs de réception (35) sont associés aux dispositifs de réception (35).

6. Dispositif de manipulation (20) selon l'une quelconque des revendications précédentes, dans lequel des limitations latérales (30) sont constituées chacune par au moins deux parties (31, 32) qui sont déplaçables les unes par rapport aux autres de manière télescopique.

7. Dispositif de manipulation (20) selon l'une quelconque des revendications 2 à 6, dans lequel, dans la première position de réglage du dispositif de manipulation (20), lesdites au moins deux parties (31, 32) sont déplaçables les unes par rapport aux autres, et dans lequel, dans la deuxième position de travail du dispositif de manipulation (20), la disposition relative desdites au moins deux parties (31, 32) les unes par rapport aux autres est fixée.

8. Dispositif de manipulation (20) selon la revendication 7, dans lequel la disposition relative desdites au moins deux parties (31, 32) les unes par rapport aux autres est fixée par l'intermédiaire d'éléments de verrouillage ou de moyens magnétiques.

9. Dispositif de manipulation (20) selon l'une quelconque des revendications 2 à 8, dans lequel, dans la première position de réglage du dispositif de manipulation (20), les éléments d'entraînement (26) sont disposés dans les dispositifs de réception (35) et sont fixés à poste fixe, et dans lequel, dans la deuxième position de travail du dispositif de manipulation (20), les éléments d'entraînement (26) sont disposés de manière espacée par rapport aux dispositifs de réception (35).

10. Dispositif de manipulation (20) selon l'une quelconque des revendications 2 à 9, dans lequel, dans la deuxième position de travail du dispositif de manipulation (20), une distance (a1-1, a2-1) séparant les limitations transversales (22, 23) correspond au moins à une longueur (L1, L2) réglée des limitations latérales (30), dans lequel, en particulier, dans la deuxième position de travail du dispositif de manipulation (20), la distance (a1 -1, a2-1) séparant les limitations transversales (22, 23) est supérieure à la longueur réglée des limitations latérales (30).
